# EUROPÄISCHE PATENTSCHRIFT

(11) **EP 3 390 871 B1**
(45) Veröffentlichungstag und Bekanntmachung des Hinweises auf die Patenterteilung: **10.11.2021**
(21) Anmeldenummer: 16822636.3
(22) Anmeldetag: 15.12.2016
(51) Int. Cl.: F16K 3/02, F16K 3/312, F16K 3/32, F16K 3/34

(54) **VENTILEINRICHTUNG**
VALVE DEVICE
DISPOSITIF VANNE

(30) Priorität: 16.12.2015 DE 102015121983
(43) Veröffentlichungstag der Anmeldung: 24.10.2018
(73) Patentinhaber: Binder GmbH, 89081 Ulm (DE)
(72) Erfinder: BINDER, Robert, 89150 Laichingen (DE)
(74) Vertreter: Witte, Weller & Partner Patentanwälte mbB
(86) Internationale Anmeldenummer: PCT/EP2016/081243
(87) Internationale Veröffentlichungsnummer: WO 2017/102973

(56) Entgegenhaltungen:
- EP-A2- 0 185 204
- EP-A2- 0 895 011
- US-A- 2 000 853
- US-A- 2 001 271
- US-A- 2 824 715
- US-A- 3 170 670
- US-A- 3 636 971
- US-A- 3 945 606
- US-A- 4 201 365
- US-A- 5 295 661

## Beschreibung

Die vorliegende Erfindung betrifft eine Blendenregulierschieber-Vorrichtung zur Regelung des Gasdurchflusses, mit einem Ventilkörper mit einer von dem Medium in Strömungsrichtung durchströmten Öffnung, die durch eine Umfangsfläche im Ventilkörper begrenzt ist; und einer Blende, die in einem Spalt innerhalb des Ventilkörpers senkrecht zur Strömungsrichtung verschiebbar angeordnet ist, um die Strömung durch die Öffnung zu beeinflussen, wobei der Spalt die Umfangsfläche in eine einlaufseitige und eine auslaufseitige Teil-Umfangsfläche trennt, und wobei die auslaufseitige Teil-Umfangsfläche eine der Blende zugewandte erste Kante und eine der Blende abgewandte zweite Kante aufweist.

Allgemein sind Ventilvorrichtungen für flüssige oder gasförmige Medien bekannt, bspw. aus US 5,295,661 A, EP 0 185 204 A2, US 3,636,971 A, US 4,201,365 A oder US 3,945,606 A. Sie werden dazu verwendet, den Durchfluss eines Mediums durch die Öffnung hindurch zu regeln. Diese Regelung erfolgt dadurch, dass der durchströmte Querschnitt der Öffnung durch Verschieben der Blende senkrecht zur Strömungsrichtung verändert wird.

Im Betrieb traten bei solchen Ventilvorrichtungen sehr starke Geräusch-Emissionen auf, wobei diese insbesondere in einem Hubbereich der Blende von ca. 40-100 % wahrzunehmen waren.

Solche teils sehr starke Geräusch-Emissionen sind bei vielen Anwendungen nicht erwünscht.

Vor diesem Hintergrund besteht die Aufgabe der vorliegenden Erfindung insbesondere darin, die eingangs genannte Blendenregulierschieber-Vorrichtung so weiterzubilden, dass eine Reduzierung der Geräusch-Emission erreicht wird.

Diese Aufgabe wird von einer Blendenregulierschieber-Vorrichtung mit den Merkmalen des Anspruchs 1 gelöst. Sie wird insbesondere dadurch gelöst, dass der ersten Kante zumindest ein geometrisches Merkmal zugeordnet ist, das ausgebildet ist, die erste Kante zu verungleichmäßigen, wobei das geometrische Merkmal als zur ersten Kante hin offene Ausnehmungen in der auslaufseitigen Teil-Umfangsfläche ausgebildet sind.

Die Erfinder haben überraschenderweise festgestellt, dass eine Verungleichmäßigung der Geometrie der ersten Kante zu einer Reduzierung des Geräuschs beim Durchströmen der Öffnung mit einem gasförmigen Medium führt. Das "Brechen" der Symmetrie der Strömung führt offensichtlich dazu, dass sich auch eine für das Geräusch verantwortliche stehende Druckwelle verändert.

In diesem Zusammenhang ist unter dem Begriff "Kante" ein Kanten-Bereich zu verstehen, der zwei im Wesentlichen senkrecht zueinander stehende Flächen miteinander verbindet. "Kante" ist folglich nicht als geometrische Linie alleine zu verstehen, sondern kann auch eine Fläche sein.

Dieses eine oder die mehreren geometrischen Merkmale führen dazu, dass die erste Kante einen ungleichmäßigen Verlauf erhält, der eine symmetrische Ausbildung der Strömung verhindert.

Bei einer weiteren bevorzugten Ausgestaltung ist der Ventilkörper als Guss-Teil ausgebildet, und das geometrische Merkmal ist Bestandteil des Guss-Teils.

Diese Maßnahme hat den Vorteil, dass das zur Reduzierung des Geräuschs erforderliche geometrische Merkmal in sehr einfacher bereits bei der Gussherstellung des Ventilkörpers mit ausgebildet werden kann. Nachträgliche Bearbeitungsschritte sind folglich nicht erforderlich.

Selbstverständlich wäre es auch denkbar, den Ventilkörper im Guss-Verfahren herzustellen und in einem anschließenden zerspanenden Schritt die geometrischen Merkmale einzubringen. Der Vorteil dieser Lösung bestünde darin, dass für beide Gehäuseplatten nur eine Guss-Form notwendig wäre.

Erfindungsgemäß weist die Blende einen unteren Rand auf, der bogenförmig, vorzugsweise teilkreisförmig oder teilelliptisch ausgebildet ist.

Erfingundungsgemäß ist das geometrische Merkmal in einem Bereich der Umfangsfläche vorgesehen, der benachbart dem Bereich des Spalts ist, in den die Blende beim Schließen der Öffnung eintaucht.

D.h. mit anderen Worten, dass das geometrische Merkmal in einem Bereich der Öffnung vorgesehen ist, der nahezu im gesamten Betriebs-Bereich der Ventilvorrichtung in der Strömung liegt. Das geometrische Merkmal in einem Bereich der Umfangsfläche, der in der Strömung liegt, wenn die Blende zu 40% (100 % bedeutet ganz geöffnet), vorzugsweise zu 20% geöffnet ist.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung, welcher durch die Ansprüche definiert ist, zu verlassen.

Weitere Vorteile und Ausgestaltungen der Erfindung ergeben sich aus der Beschreibung und der beiliegenden Zeichnung. Dabei zeigen:
Figur 1A eine schematische Darstellung einer erfindungsgemäßen Ventilvorrichtung;
Figur 1B eine schematische Darstellung der Ventilvorrichtung von Figur 1A von der anderen Seite;
Figur 2A eine schematische Darstellung eines Ausschnitts des Ventilkörpers;
Figur 2B eine schematische Darstellung des in Figur 2A gezeigten Ventilkörpers aus einer anderen Perspektive;
Figur 3A eine schematische perspektivische Darstellung einer Ventilvorrichtung nach dem Stand der Technik; und
Figur 3B eine schematische Darstellung der Ventilvorrichtung von Figur 3A in einer Vorderansicht.

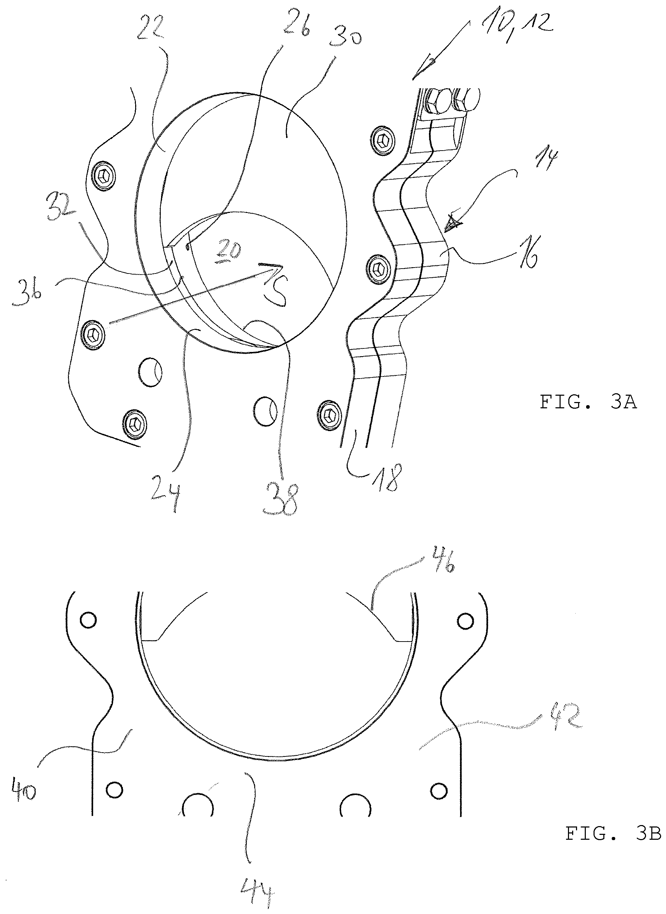

In Figur 3A ist in einer stark vereinfachten, schematischen perspektivischen Darstellung ein Ventil dargestellt und mit dem Bezugszeichen 10 gekennzeichnet. Aus Vereinfachungsgründen sind nur sehr wenige Bauelemente des Ventils dargestellt. Das Ventil 10 ist erfindungsgemäß als Blendenregulierschieber-Ventil 12 ausgebildet.

Das Ventil 10 umfasst einen Ventilkörper 14, der aus zumindest zwei miteinander lösbar verbundenen Gehäuseplatten 16,18 besteht.

Im Ventilkörper 14 und damit in den beiden Gehäuseplatten 16,18 ist eine kreisförmige Öffnung vorgesehen, durch die ein gasförmiges Medium hindurch strömen soll. Die vorgesehene Strömungsrichtung ist in Figur 3A durch einen Pfeil S dargestellt.

Die Öffnung 20 im Ventilkörper 14 wird in radialer Richtung, d.h. rechtwinklig zur Strömungsrichtung S durch eine Umfangsfläche 22 begrenzt. Die Umfangsfläche 22 erstreckt sich parallel zu der Strömungsrichtung S.

Die Umfangsfläche 22 gliedert sich in Strömungsrichtung S gesehen in zwei Teil-Umfangflächen 24,26, die an den beiden Gehäuseplatten 16,18 ausgebildet sind. Bedingt durch die Strömungsrichtung S wird die Teil-Umfangsfläche als einlaufseitige Teil-Umfangsfläche 24 und die Teil-Umfangsfläche 26 als auslaufseitige Teil-Umfangsfläche 26 bezeichnet.

Zur Regulierung des Durchflusses des Gases durch die Öffnung 20 ist eine Blende 30 vorgesehen. Die Blende 30 ist plattenförmig ausgebildet und zwischen den beiden Gehäuseplatten 16,18 senkrecht zur Strömungsrichtung S verlagerbar gehalten. Hierfür ist zwischen den beiden Gehäuseplatten 16,18 ein Spalt 32 vorgesehen, in welchem die Blende 30 gehalten ist. Durch die Verlagerung der Blende 30 lässt sich die Öffnung 20 vollständig öffnen und vollständig schließen. In dem in Figur 3A gezeigten Beispiel ist die Blende 30 etwa 60% geschlossen.

Durch den Spalt 32 sind die beiden Teil-Umfangsflächen 24, 26 voneinander getrennt, sodass sich in Strömungsrichtung S gesehen eine Kante 36 an der auslaufseitigen Teil-Umfangsfläche 26 ausbildet. Diese Kante 36 ist der Verbindungsbereich zwischen der Teil-Umfangsfläche 26, die sich in Strömungsrichtung S parallel erstreckt und einer dazu senkrecht verlaufenden Fläche der Gehäuseplatte 16.

Obgleich in der in Figur 3A gezeigten Darstellung die Kante 36 linienförmig ist, sind als Kante im Kontext der vorliegenden Beschreibung auch flächige Bereiche zu verstehen, die die Verbindung zwischen den beiden Flächen, also der Teil-Umfangsfläche und der senkrecht dazu verlaufenden Fläche der Gehäuseplatte, herstellen.

Die Teil-Umfangsfläche 26 weist eine weitere Kante 38 auf, die in Strömungsrichtung S gesehen der ersten Kante 36 folgt.

Wie sich aus Figur 3B noch ergibt wird der Spalt 32 und damit der Aufnahmeraum für die Blende 30 seitlich von Führungen 40,42 begrenzt, in denen die Blende einerseits zur Verlagerung geführt ist und andererseits durch entsprechende Dichtungen abgedichtet ist. Im unteren Bereich des Ventilkörpers 14 ist im Spalt 32 eine Dichtung bzw. Enddichtung 44 vorgesehen, deren Form sich an die Form der zugewandten Kante der Blende 30 angepasst ist. Im geschlossenen Zustand liegt die untere Kante, die mit dem Bezugszeichen 46 gekennzeichnet ist, dichtend auf.

Im vorliegenden Ausführungsbeispiel hat die Kante 46 der Blende eine Bogenform, vorzugsweise eine Teilkreis- oder Teilelliptische-Form.

Im Betrieb des Ventils 10 durchströmt ein Gas die beispielsweise teilweise geschlossene Öffnung 20, wobei die Strömung auch über die erste Kante 36 hinweg läuft.

Die Erfinder haben nun überraschenderweise festgestellt, dass die erste Kante 36 die Ursache für eine sehr starke Geräusch-Emission ist. Es entsteht an der symmetrischen Kante 36 eine stehende Druckwelle, die die Geräusch-Emissionen verursacht.

Zur Reduzierung der Geräusch-Emission sind nun an der ersten Kante 36 an der auslaufseitigen Teil-Umfangsfläche 26, insbesondere im unteren Bereich, ein oder mehrere geometrische Merkmale vorgesehen, die die Symmetrie der Kante 36 brechen. D.h. mit anderen Worten, dass der Verlauf der Kante 36 zumindest in einem bestimmten Umfangs-Bereich der Umfangsfläche 26 verungleichmäßigt wird. "Unterer Bereich" bezeichnet dabei jenen Bereich der Teil-Umfangsfläche 26, der der unteren Kante 46 der Blende 30 gegenüberliegt. Der "untere Bereich" ist insbesondere jener Bereich der Teil-Umfangsfläche 26, der bei einer Öffnung der Blende bis zu 60%, bevorzugt bis maximal 40% frei liegt bzw. angeströmt wird, also nicht von der Blende abgedeckt ist.

Als geometrische Merkmale lassen sich unterschiedlichste Elemente vorsehen, die die Strömung in diesem Bereich beeinflussen. So können als geometrische Merkmale beispielsweise Erhöhungen an der Teil-Umfangsfläche 26 vorgesehen sein, die in die Öffnung 20 hineinragen. Durch diese Erhöhungen verändert sich der Verlauf der Kante 36, die von der Strömung angeströmt wird.

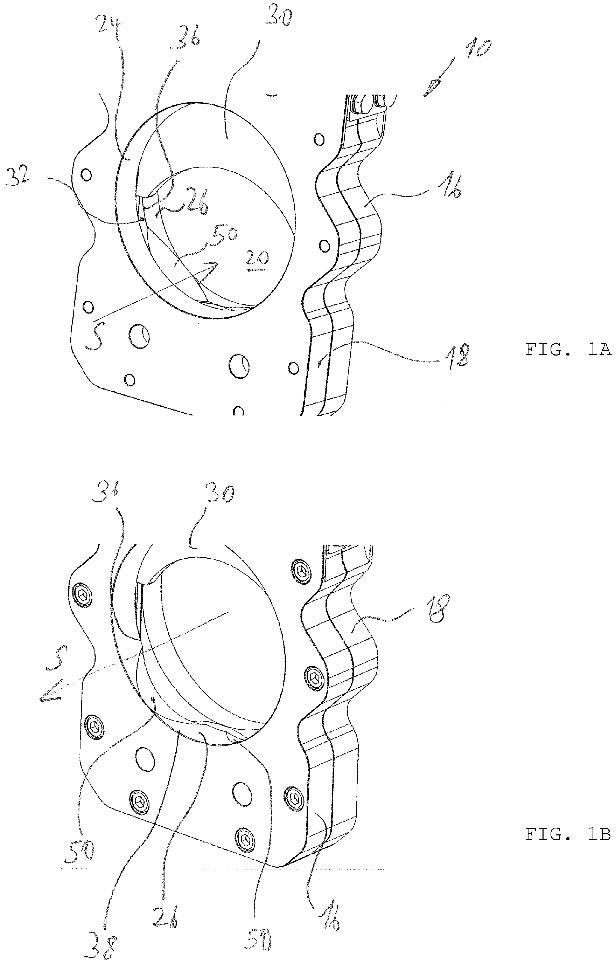

Als besonders vorteilhaftes geometrisches Merkmal hat sich eine in der Teil-Umfangsfläche 26 vorgesehene Vertiefung herausgestellt, die im Bereich der ersten Kante 36 randoffen ausgebildet ist. In Figur 1A ist eine solche Ausgestaltung dargestellt.

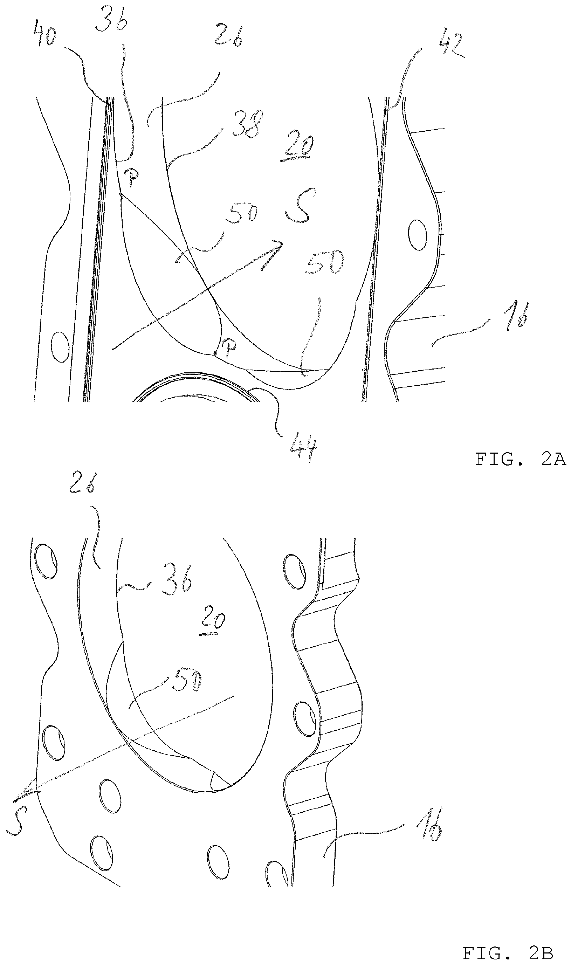

Aus Vereinfachungsgründen werden in den Figuren 1A, B und 2A, B die gleichen Bezugszeichen für gleiche Bauteile verwendet wie in Figuren 3A, B, sodass eine nochmalige Erläuterung dieser Bauteile entbehrlich ist.

In Figur 1A ist die Ausnehmung in der Teil-Umfangsfläche 26 mit dem Bezugszeichen 50 gekennzeichnet. Die Ausnehmung 50 ist zu Kante 36 randoffen ausgebildet, sodass sich der Verlauf der Kante 36 im Bereich der Ausnehmung 50 verändert. Die Ausnehmung 50 kann unterschiedliche Formen aufweisen, solange sich der Verlauf der Kante 36 verändert. Im vorliegenden Ausführungsbeispiel hat die Ausnehmung 50 -in Draufsicht gesehen- eine Kreissegmentform.

Besonders bevorzugt sind in der Teil-Umfangsfläche 26 zwei solcher Ausnehmungen 50 vorgesehen. Dabei sind die eine oder die mehreren Ausnehmungen 50 in einem unteren Bereich der Teil-Umfangsfläche 26 vorgesehen. "Unten" bedeutet in diesem Zusammenhang jener Bereich, auf den sich die Blende 30 beim Schließen der Öffnung zubewegt.

Figur 1B zeigt das Ventil 10 von Figur 1A jedoch von der anderen Seite. D.h., dass nun die auslaufseitige Gehäuseplatte 16 und damit auch die auslaufseitige Teil-Umfangsfläche 26 im Vordergrund zu sehen sind. Zu erkennen sind zwei Ausnehmungen 50, die -wie bereits beschrieben- den Verlauf der ersten Kante 36 verändern. Zu erkennen ist aber auch, dass die Ausnehmungen 50 den Verlauf der weiteren Kante 38 der Teil-Umfangsfläche 26 nicht verändern, d.h. unverändert lassen. Allerdings ist an dieser Stelle anzumerken, dass eine Veränderung der Kante 38 ebenfalls möglich wäre.

Zur weiteren Verdeutlichung der Ausgestaltung der Teil-Umfangsfläche 26 ist in den Figuren 2A und 2B die Gehäuseplatte 16 alleine ohne die weitere Gehäuseplatte 18 von beiden Seiten dargestellt. In Figur 2A ist dabei die Führung 40, 42 für die Blende 30 sowie die untere Dichtung bzw. Enddichtung 44 zu erkennen. Ferner verdeutlicht die Darstellung in Figur 2A nochmals, dass sich der Verlauf der Kante 36 durch die Ausnehmung 50 an den mit P gekennzeichneten Punkten verändert und damit die Symmetrie der Kante 36 aufbricht.

Diese Veränderung des Kantenverlaufs der angeströmten Kante 36 führt zu einer deutlichen Reduzierung der Geräusch-Emission, ohne jedoch zu große Druckverluste zu verursachen. Da die Herstellung der Ausnehmungen 50 bereits beim Gießen der Gehäuseplatten 16 erfolgen kann, lassen sich die geometrischen Merkmale 50 sehr einfach und kostengünstig realisieren.

Selbstverständlich kann die Form der Ausnehmung 50 variiert werden, solange der Kantenverlauf der Kante 36 sich dadurch verändert.

Zusätzlich oder alternativ kann die Dichtung 44 so ausgebildet sein, dass sie in die Öffnung 20 hineinragt. Auch durch eine solche Maßnahme verändert sich die von der Strömung angeströmte Kante 36, sodass eine Verungleichmäßigung bzw. Asymmetrie erreicht wird.

Insgesamt ergibt sich, dass durch Ausbilden von zumindest einem geometrischen Merkmal an der auslaufseitigen Teil-Umfangsfläche, beispielsweise in Form von Ausnehmungen 50, eine einfache Lösung zur Reduzierung der Geräusch-Emission bereitgestellt wird.

## Patentansprüche

1. Blendenregulierschieber-Vorrichtung zur Regelung eines Gasdurchflusses, mit
einem Ventilkörper mit einer von dem Medium in Strömungsrichtung durchströmbaren Öffnung (20), die durch eine parallel zur Strömungsrichtung liegende Umfangsfläche (22) im Ventilkörper begrenzt ist,
einer Blende (30), die in einem Spalt innerhalb des Ventilkörpers senkrecht zur Strömungsrichtung verschiebbar angeordnet ist, um die Strömung durch die Öffnung zu beeinflussen, wobei der Spalt die Umfangsfläche in eine einlaufseitige und eine auslaufseitige Teil-Umfangsfläche (24, 26) trennt, wobei die auslaufseitige Teil-Umfangsfläche (26) der einlaufseitigen Teil-Umfangsfläche in Strömungsrichtung folgt, und wobei die auslaufseitige Teil-Umfangsfläche (26) eine der Blende zugewandte erste Kante (36) und eine der Blende (30) abgewandte zweite Kante (38) aufweist,
wobei die Blende (30) einen unteren Rand aufweist, der bogenförmig, vorzugsweise teilkreisförmig oder teilelliptisch ausgebildet ist,
**dadurch gekennzeichnet, dass**
die erste Kante (36) mehrere geometrische Merkmale (50) zur Reduzierung von Geräusch-Emission aufweist, die ausgebildet sind, die erste Kante (36) zu verungleichmäßigen, wobei die geometrischen Merkmale (50) in einem Bereich der auslaufseitigen Teil-Umfangsfläche (26) vorgesehen sind, der benachbart dem Bereich des Spalts ist, in den die Blende beim Schließen der Öffnung eintaucht, und wobei die geometrischen Merkmale (50) als zur ersten Kante (36) hin offene Ausnehmungen (50) in der auslaufseitigen Teil-Umfangsfläche (26) ausgebildet sind,
wobei die mehreren geometrische Merkmale (50) in einem Bereich der Teil-Umfangsfläche (26) vorgesehen sind, der bei einer Öffnung der Blende von 40%, angeströmt ist, wobei 0% einer vollständigen Schließung der Öffnung (20) durch die Blende (30) entspricht.

2. Blendenregulierschieber-Vorrichtung nach Anspruch 1, **dadurch gekennzeichnet, dass** der Ventilkörper zwei vorzugsweise plattenförmige Elemente (16, 18) aufweist, die miteinander verbunden sind.

3. Blendenregulierschieber-Vorrichtung nach einem der vorhergehenden Ansprüche, **dadurch gekennzeichnet, dass** der Ventilkörper als Guss-Teil ausgebildet ist, und das geometrische Merkmal Bestandteil des Guss-Teils ist.

4. Blendenregulierschieber-Vorrichtung nach einem der vorhergehenden Ansprüche, **dadurch gekennzeichnet, dass** die Blende derart ausgebildet ist, dass sie den gesamten Querschnitt der Öffnung bei Vollöffnung freigibt.

## Claims

1. Diaphragm control valve device for controlling a gas flow, comprising
a valve body with an opening (20) through which the medium can flow in the direction of flow and which is bounded by a circumferential surface (22) in the valve body lying parallel to the direction of flow,
a diaphragm (30) slidably disposed in a gap within the valve body perpendicular to the direction of flow to affect the flow through the orifice, the gap separating the circumferential surface into an inlet-side and an outlet-side partial circumferential surface (24, 26), wherein the outlet-side partial circumferential surface (26) follows the inlet-side partial circumferential surface in the direction of flow, and wherein the outlet-side partial circumferential surface (26) has a first edge (36) facing the diaphragm and a second edge (38) facing away from the diaphragm (30),
wherein the diaphragm (30) has a lower edge which is arcuate, preferably part-circular or part-elliptical;
**characterized in that**
the first edge (36) has a plurality of geometric features (50) for reducing noise emission, which are designed to make the first edge (36) non-uniform, the geometric features (50) being provided in a region of the outlet-side partial circumferential surface (26) which is adjacent to the region of the gap into which the diaphragm dips when the opening is closed, and the geometric features (50) being designed as recesses (50) in the outlet-side partial circumferential surface (26) which are open towards the first edge (36),
wherein said plurality of geometric features (50) are provided in a region of said partial circumferential surface (26) that is flowed against when said orifice is 40% open, wherein 0% corresponds to a complete closure of said orifice (20) by said orifice (30).

2. Diaphragm control valve device according to claim 1, **characterized in that** the valve body comprises two preferably plate-shaped elements (16, 18) which are connected to each other.

3. Diaphragm control valve device according to any one of the preceding claims, **characterized in that** the valve body is formed as a cast part, and the geometric feature is part of the cast part.

4. Diaphragm control valve device according to any one of the preceding claims, **characterized in that** the diaphragm is configured to clear the entire cross-section of the opening when fully open.

## Revendications

1. Dispositif de coulisseau de régulation d'obturateur pour le réglage d'un débit gazeux, comprenant :
un corps de soupape muni d'une ouverture (20) pouvant être traversée par le milieu dans une direction d'écoulement, qui est délimitée dans le corps de soupape par une surface périphérique (22) située parallèlement à la direction d'écoulement,
un obturateur (30), qui est agencé de manière coulissante perpendiculairement à la direction d'écoulement dans une fente à l'intérieur du corps de soupape, afin d'influencer l'écoulement à travers l'ouverture, la fente séparant la surface périphérique en une surface périphérique partielle côté entrée et une surface périphérique partielle côté sortie (24, 26), la surface périphérique partielle côté sortie (26) suivant la surface périphérique partielle côté entrée dans la direction d'écoulement, et la surface périphérique partielle côté sortie (26) comprenant une première arête (36) tournée vers l'obturateur et une deuxième arête (38) détournée de l'obturateur (30),
l'obturateur (30) comprenant un bord inférieur, qui est configuré sous forme arquée, de préférence sous la forme d'une partie de cercle et/ou d'une partie d'ellipse,
**caractérisé en ce que**
la première arête (36) présente plusieurs caractéristiques géométriques (50) pour la réduction de l'émission de bruit, qui sont configurées pour rendre la première arête (36) non uniforme, les caractéristiques géométriques (50) étant prévues dans une zone de la surface périphérique partielle côté sortie (26) qui est voisine de la zone de la fente dans laquelle l'obturateur pénètre lors de la fermeture de l'ouverture, et les caractéristiques géométriques (50) étant configurées sous la forme d'évidements (50) ouverts vers la première arête (36) dans la surface périphérique partielle côté sortie (26),
les plusieurs caractéristiques géométriques (50) étant prévues dans une zone de la surface périphérique partielle (26) qui reçoit un écoulement lors d'une ouverture de l'obturateur de 40 %, 0 % correspondant à une fermeture complète de l'ouverture (20) par l'obturateur (30).

2. Dispositif de coulisseau de régulation d'obturateur selon la revendication 1, **caractérisé en ce que** le corps de soupape comprend deux éléments (16, 18) de préférence en forme de plaque, qui sont reliés l'un à l'autre.

3. Dispositif de coulisseau de régulation d'obturateur selon l'une quelconque des revendications précédentes, **caractérisé en ce que** le corps de soupape est configuré sous la forme d'une pièce coulée, et la caractéristique géométrique fait partie de la pièce coulée.

4. Dispositif de coulisseau de régulation d'obturateur selon l'une quelconque des revendications précédentes, **caractérisé en ce que** l'obturateur est configuré de telle sorte qu'il dégage la section transversale entière de l'ouverture lors d'une ouverture complète.
